# EUROPÄISCHE PATENTSCHRIFT

(11) **EP 3 785 579 B1**
(45) Veröffentlichungstag und Bekanntmachung des Hinweises auf die Patenterteilung: **18.09.2024**
(21) Anmeldenummer: 20185393.4
(22) Anmeldetag: 13.07.2020
(51) Int. Cl.: A47J 31/52

(54) **GETRÄNKE-PARAMETEREINSTELLUNG AN EINEM GETRÄNKEBEREITER**
BEVERAGE PARAMETER ADJUSTMENT IN A BEVERAGE MACHINE
RÉGLAGE DES PARAMÈTRES DE BOISSONS SUR UN APPAREIL DE PRÉPARATION DE BOISSONS

(30) Priorität: 28.08.2019 DE 102019123007
(43) Veröffentlichungstag der Anmeldung: 03.03.2021
(73) Patentinhaber: Miele & Cie. KG, 33332 Gütersloh (DE)
(72) Erfinder: Wolbeck, Michael, 33330 Gütersloh (DE)

(56) Entgegenhaltungen:
- EP-A1- 3 205 245
- EP-A1- 3 275 345
- DE-A1- 102017 122 719
- US-A1- 2018 042 422

## Beschreibung

Die Erfindung betrifft ein Verfahren zur geführten Einstellung von Parametern für das Bereiten eines Getränks mit einem Getränkebereiter, sowie einen entsprechenden Getränkebereiter, insbesondere einen Kaffeevollautomaten.

Viele Benutzer nutzen einen Kaffeevollautomaten, ohne die unterschiedlichen Parameter (Wassermenge, Mahlmenge, Wassertemperatur, Brühdauer, Druck, Vorbrühen, Fließgeschwindigkeit, Milchmenge, Milchschaumkonsistenz, etc.) auf die jeweils verwendeten Kaffeebohnen und ihren individuellen Geschmack einzustellen. Oft weiß der Benutzer noch nicht einmal, welchen Einfluss die Änderung eines bestimmten Parameters auf Eigenschaften des bereiteten Kaffees hat. Der Benutzer wird daher häufig alle oder zumindest einige der vorgegebenen Einstellungen des Geräts unverändert belassen, insbesondere die, bei denen er die Auswirkung nicht ohne Weiteres abschätzen kann.

Aus der DE 10 2017 122719 A1 ist ein Verfahren bekannt, bei dem eine Liste von verschiedenen Getränketypen an die Steuereinrichtung des Getränkebereiters übermittelt wird, die dann im Gerät entsprechend einer neu sortierten Reihenfolge abgearbeitet wird. Eine individuelle Anpassung oder Einstellung der Brühparameter ist hierbei nicht vorgesehen.

Im besten Fall wird der Benutzer einen Prozess in der Art von "Trial and error" durchlaufen, bei dem er mehrfach Kaffee mit unterschiedlichen Einstellungen bereitet, um die für ihn optimale Einstellung zu finden. Häufig wird er dies tun, ohne überhaupt zu verstehen, in welche Richtung die Änderung eines Parameters den Geschmack überhaupt verändert, beispielsweise in Bezug auf die Brühtemperatur und daher resultierende Menge der Bitterstoffe. Dies ist sowohl zeitraubend als auch fehlerträchtig, insbesondere da Parameter sich auch gegenseitig beeinflussen können.

Der Erfindung stellt sich somit das Problem, ein Verfahren für einen Getränkebereiter sowie einen entsprechenden Getränkebereiter bereitzustellen, um es einem Benutzer zu ermöglichen, systematisch und effizient Parametereinstellungen zu tätigen.

Erfindungsgemäß wird dieses Problem durch ein Verfahren und einen Getränkebereiter gemäß den unabhängigen Ansprüchen gelöst. Vorteilhafte Ausgestaltungen und Weiterbildungen der Erfindung ergeben sich aus den Unteransprüchen.

Gemäß einem Aspekt wird ein erfindungsgemäßes Verfahren zur Ansteuerung eines Getränkebereiters bereitgestellt mit den Verfahrensschritten gemäß des Anspruchs 1.

Mit Hilfe des erfindungsgemäßen Verfahrens wird dem Benutzer ermöglicht, sein perfektes Geschmackserlebnis bei Getränken einzustellen. Hierzu erhält der Benutzer zwei gleiche Getränketypen, beispielsweise Kaffeespezialitäten, mit jeweils unterschiedlichen Parametereinstellungen angeboten. Diese Kaffeespezialitäten stellen bevorzugt jeweils Extrema hinsichtlich des von dem Parameter beeinflussten Geschmacks dar. Als Getränkeparameter

Zum Beispiel: Kaffee #1 mit Vorbrühen, mit hoher Brühtemperatur, großer Mahlmenge, Kaffee #2 ohne Vorbrühen, mit niedriger Brühtemperatur, kleiner Mahlmenge. Der Benutzer entscheidet nun, welcher der beiden Kaffees seiner Präferenz entspricht oder dieser zumindest am nächsten kommt. Ohne darüber Bescheid wissen zu müssen, welchen Einfluss der Parameter hinsichtlich des Geschmacks hat, kann der Benutzer so einfach und zielgerichtet den Parameter auf seine persönliche Präferenz einstellen. Anhand des vom Benutzer angegebenen Getränks wird der zugehörige Parameter im Getränkebereiter als Vorgabe abgespeichert.

Es sollte angemerkt werden, dass die beiden Getränke sich zwar hinsichtlich des unterschiedlichen Getränkebereitungsparameters unterscheiden, vom Typ her aber identisch sein müssen, um einen sinnvollen Vergleich anstellen zu können. Getränketypen sind beispielsweise Espresso, Kaffee, Kaffee lang oder Cappuccino.

Im Kontext dieser Anmeldung ist der Begriff "Getränkebereitungsparameter" so zu verstehend, dass darunter sowohl einzelne Parameter als auch ein Parameter-Satz, also eine Zusammenstellung von zwei oder mehr einzelnen Parametern, fallen. Ein Beispiel für einen einzelnen Parameter wäre die Brühtemperatur oder die Mahlmenge. Ein Beispiel für einen Getränkebereitungsparameter-Satz wäre wie vorstehend genannt der Parameter-Satz "mit Vorbrühen, mit hoher Brühtemperatur, große Mahlmenge". Der Begriff "Wert eines Getränkebereitungsparameters" ist entsprechend als Einzelwert wie z.B. 86 °C oder 92 °C oder als Wertezusammenstellung wie etwa "Vorbrühen: ja, Brühtemperatur 90 °C, Mahlmenge 10 g" zu verstehen.

Erfindungsgemäß umfasst das Verfahren weiter:
- Anzeigen einer Auswahl des ersten und des zweiten Getränks für die Benutzereingabe;
   wobei
- das Anzeigen auf einem Gerätedisplay des Getränkebereiters oder einem mit dem Getränkebereiter gekoppelten mobilen Endgerät erfolgen kann; und
- das Empfangen der Benutzereingabe über ein Bedienelement des Getränkebereiters oder von dem gekoppelten mobilen Endgerät erfolgen kann.

Hiermit wird durch eine Darstellung des jeweiligen Getränks dem Benutzer eine einfache und intuitive Möglichkeit geboten, das ihm besser schmeckende Getränk anzugeben. Beispielsweise kann dies über einen Touchscreen mit einer eindeutigen grafischen Darstellung erfolgen, wobei der Touchscreen ein im Getränkebereiter integrierter Touchscreen oder der eines mobilen Endgeräts wie Smartphone oder Tablet oder dergleichen. Durch die intuitive Eingabemöglichkeit muss der Benutzer keinerlei Vorwissen über die Zusammenhänge von Getränkebereitungsparameter und resultierendem Getränk besitzen.

Gemäß einer Ausführungsform umfasst das Verfahren weiter, wobei der Getränkebereitungsparameter mehr als zwei verschiedene Werte annehmen kann:
- Empfangen einer Benutzereingabe, die den Benutzerwunsch nach einer weiteren Anpassung des Getränkebereitungsparameters angibt;
- Zubereiten eines dritten Getränks mit einem dritten Wert des Getränkebereitungsparameters;
- Zubereiten eines vierten Getränks mit einem vierten Wert des Getränkebereitungsparameters;
   wobei sich der dritte und der vierte Wert von dem abgespeicherten Wert unterscheiden, wobei der Unterschied geringer ist als die Differenz zwischen dem ersten und dem zweiten Wert;
- Empfangen einer Benutzereingabe, die das dritte oder das vierte Getränk angibt; und
- Abspeichern des Getränkebereitungsparameters des angegebenen Getränks als Vorgabe für die Bereitung des Getränks.

Hiermit kann der Benutzer in iterativer Weise einen Getränkebereitungsparameter, der einen Wertebereich oder zumindest mehr als zwei Werte einnehmen kann, weiter optimieren, sofern bei dem ersten bzw. vorhergehenden Durchlauf noch nicht das endgültig zufriedenstellende Getränk bereitet wurde. Im Gegensatz dazu kann ein Getränkebereitungsparameter, der nur zwei Werte annehmen kann, etwa "mit Vorbrühen" und "ohne Vorbrühen", nicht weiter optimiert werden.

Gemäß einer Ausführungsform enthält der Getränkebereitungsparameter eines oder mehrere aus der Gruppe umfassend:
- Vorbrühen oder kein Vorbrühen;
- Brühtemperatur;
- Mahlmenge;
- Brühdruck;
- Wassermenge;
- Milchmenge.

Gemäß einem weiteren Aspekt wird ein Getränkebereiter bereitgestellt, umfassend:
- eine Getränkebereitungseinrichtung mit mindestens einem veränderbaren Getränkebereitungsparameter, der mindestens zwei verschiedene Werte annehmen kann; und
- eine Steuereinrichtung, die eingerichtet ist, ein Verfahren wie vorstehend beschrieben auszuführen.

Der Getränkebereiter kann insbesondere ein Kaffeevollautomat sein und die Getränkebereitungseinrichtung kann insbesondere eine Brüheinheit des Kaffeevollautomaten sein. Die Getränkebereitungseinrichtung kann darüber hinaus auch noch weitere Funktionen einschließen, wie beispielsweise die Erzeugung von erhitzter oder aufgeschäumter Milch für Getränke wie Cappuccino etc.

Gemäß einer Ausführungsform umfasst der Getränkebereiter weiter:
- ein Anzeigeelement, das dazu eingerichtet ist, eine Auswahl des ersten und des zweiten Getränks für die Benutzereingabe anzuzeigen; und
- ein Bedienelement, das dazu eingerichtet ist, eine Benutzereingabe zu empfangen, die das erste oder das zweite Getränk angibt.

Anzeige- und Bedienelement können separat ausgeführt sein, aber auch von einem kombinierten Anzeige-/Bedienelement gebildet werden. Das Anzeigeelement kann beispielsweise aus entsprechenden LEDs bestehen und das bzw. die Bedienelemente aus davon separaten oder damit kombinierten Sensortasten. In einer bevorzugten Ausführungsform kann ein Touchscreen ein kombiniertes Anzeige-/Bedienelement bilden.

Gemäß einer Ausführungsform umfasst der Getränkebereiter weiter:
- eine drahtlose Schnittstelle, die zur Kopplung mit einem mobilen Endgerät eingerichtet ist;
wobei die Steuereinrichtung dazu eingerichtet ist, eine Auswahl eines ersten und des zweiten Getränks für die Benutzereingabe über die Schnittstelle an das mobile Endgerät zu senden und eine Benutzereingabe, die das erste oder das zweite Getränk angibt, über die Schnittstelle von dem mobilen Endgerät zu empfangen.

In einer bevorzugten Ausführungsform umfasst der Getränkebereiter eine drahtlose Schnittstelle, über die eine Verbindung mit einem mobilen Endgerät des Benutzers hergestellt werden kann. Dies schließt sowohl direkte drahtlose Verbindungen zwischen Getränkebereiter und Endgerät als auch indirekte Verbindungen über einen Router, eine Cloud etc. ein. Es können hierfür grundsätzlich alle bekannten drahtlosen Verbindungstechniken wie Bluetooth, ZigBee, 802.11 (WLAN), RFID, NFC, Infrarot eingesetzt werden.

Es wird so möglich, den Vorgang der Parametereinstellung mit den Anzeige- und Eingabeelementen des mobilen Endgeräts des Benutzers auszuführen, die komfortabler sein können als die am Getränkebereiter selbst. Umgekehrt wird es hierdurch möglich, optional am Getränkebereiter selbst nur eine vereinfachte bzw. reduzierte Benutzerschnittstelle vorzusehen.

In einer bevorzugten Ausführungsform ist der Getränkebereiter ein Kaffeevollautomat und enthält der Getränkebereitungsparameter eines oder mehrere aus der Gruppe umfassend:
- Vorbrühen oder kein Vorbrühen;
- Brühtemperatur;
- Mahlmenge;
- Mahlgrad;
- Brühdruck;
- Wassermenge;
- Milchmenge;
- Milchschaummenge;
- Milchschaumkonsistenz;
- Fließgeschwindigkeit des Wassers.

Die Erfindung betrifft ferner ein System, umfassend einen Getränkebereiter wie vorstehend ausgeführt und ein mobiles Endgerät mit einem Anzeigeelement und einem Bedienelement zur Bereitstellung einer Bedien- und Anzeigeeinrichtung, bevorzugt als Berührbildschirm.

Ein Ausführungsbeispiel der Erfindung ist in den Zeichnungen rein schematisch dargestellt und wird nachfolgend näher beschrieben. Es zeigt
- Figur 1: eine Ausführungsform eines erfindungsgemäßen Getränkebereiters; und
- Figur 2: ein Flussdiagramm einer Ausführungsform des erfindungsgemäßen Verfahrens.

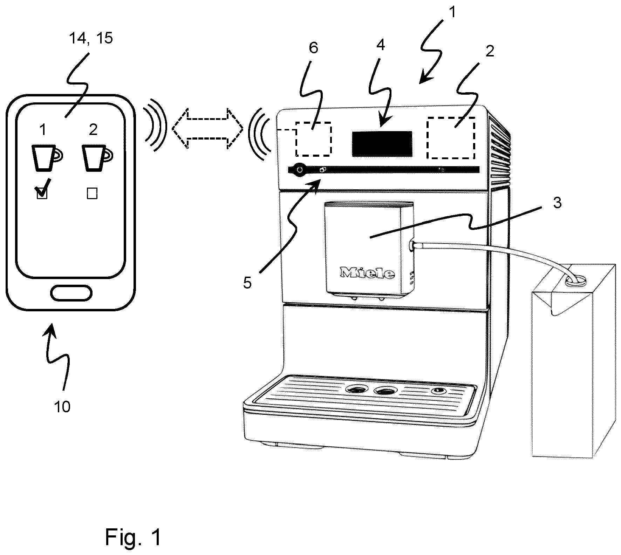

In Figur 1 ist ein erfindungsgemäßer Getränkebereiter 1, hier ein Kaffeevollautomat, gezeigt. Der Getränkebereiter 1 weist eine Getränkebereitungseinrichtung 3 auf, die veränderbare Getränkebereitungsparameter besitzt. Diese Getränkebereitungsparameter können eines oder eine beliebige Kombination umfassen von Vorbrühen Ja/Nein, Brühtemperatur, Brühdruck, Mahlmenge, Wassermenge, Milchmenge.

Der Getränkebereiter 1 weist weiter eine Steuereinrichtung 2 auf, die dazu eingerichtet ist, ein erstes Getränk und ein zweites Getränk vom gleichen Typ zuzubereiten. Mögliche Getränketypen sind beispielsweise Espresso, Kaffee, Kaffee Lang oder Cappuccino. Die beiden Getränke unterscheiden sich aber in zumindest einem Getränkebereitungsparameter, optional auch in mehreren, so dass unterschiedlich schmeckende Getränke bereitet werden. Beispielsweise wird das erste Getränk mit einer niedrigen Brühtemperatur zubereitet, und das zweite Getränk mit einer hohen Brühtemperatur. Daher werden Getränke mit unterschiedlicher Menge an Bitterstoffen entstehen. Der Benutzer kann nun das ihm besser zusagende Getränk auswählen und somit intuitiv den betreffenden Getränketyp auf seine Vorliebe einstellen.

Dazu weist der Getränkebereiter 1 in einer ersten Ausführungsform ein Anzeigeelement 4 auf, um dem Benutzer die Auswahl zwischen dem ersten und dem zweiten Getränk darzustellen. Weiter weist er ein Bedienelement 5 auf, um eine Benutzereingabe zu empfangen, die das erste oder das zweite Getränk angibt. Die hier als separate Einheiten gezeigten Anzeige- und Bedienelemente 4, 5 können auch in anderen Ausführungsformen kombiniert sein, etwa in Form eines Touchscreens.

In Fig. 1 ist auch eine zweite bevorzugte Ausführungsform mit gezeigt, die alternativ anstelle von oder auch zusätzlich zu einem Anzeige- und Bedienelement am Getränkebereiter 1 vorgesehen sein kann. Dazu weist der Getränkebereiter 1 eine drahtlose Schnittstelle 6 auf, um mit einem mobilen Endgerät 10 des Benutzers gekoppelt zu werden. Beispielsweise kann die drahtlose Schnittstelle 6 ein WLAN-Modul sein.

Über die drahtlose WLAN-Verbindung (die in der Regel über einen hier nicht gezeigten WLAN-Router läuft) sendet der Getränkebereiter 1 eine Auswahl des ersten und des zweiten Getränks an das mobile Endgerät 10. Auf dem mobilen Endgerät 10 kann der Benutzer nun seine Auswahl treffen, die dann über die WLAN-Verbindung zurück an den Getränkebereiter 1 gesendet wird. Das mobile Endgerät 10 umfasst einen Berührbildschirm zur Bereitstellung des Eingabeelements 15 und des Anzeigeelements 14. Als Eingabeelemente 15 werden Berührflächen bereitgestellt, die bei Berührung die entsprechende Getränkeauswahl des Benutzers, hier beispielsweise Getränk #1, erfasst.

Unabhängig davon, auf welchem Weg der Getränkebereiter 1 die Auswahl empfangen hat, kann er nun für den betreffenden Getränketyp die dem ausgewählten Getränk entsprechende Parametereinstellung für diesen Getränketyp als Vorgabe abspeichern. In Zukunft erhält der Benutzer bei Anwahl des Getränketyps das gemäß seiner Vorliebe eingestellte Getränk.

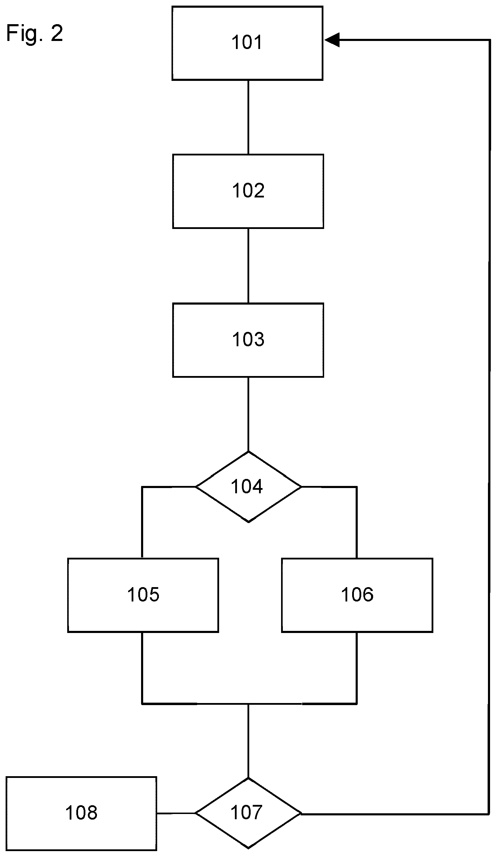

Fig. 2 ist ein Flussdiagramm einer Ausführungsform des erfindungsgemäßen Verfahrens, das in einem Getränkebereiter ausgeführt wird. In Schritt 101 wird ein erstes Getränk mit einem ersten Wert eines Getränkebereitungsparameters zubereitet. In Schritt 102 wird ein zweites Getränk mit einem zweiten Wert eines Getränkebereitungsparameters zubereitet. Bei beiden Getränken handelt es sich um einen identischen Getränketyp wie beispielsweise Espresso, Kaffee, Kaffee lang oder Cappuccino. Beide Getränke unterscheiden sich in mindestens einem für die Zubereitung relevanten Parameter wie Vorbrühen oder kein Vorbrühen, Brühtemperatur, Mahlmenge, Brühdruck, Wassermenge oder Milchmenge. Es ist aber auch möglich, dass sich mehrere oder sogar alle Parameter bei den beiden Getränken unterscheiden.

In Schritt 103 wird eine Auswahl des ersten und des zweiten Getränks angezeigt, um einem Benutzer eine Auswahl zu ermöglichen. Dies kann entweder auf einer Anzeige des Getränkebereiters selbst und/oder auf einem mit dem Getränkebereiter drahtlos gekoppelten mobilen Endgerät erfolgen. In Schritt 104 wird, entweder direkt mittels eines Bedienelements des Getränkebereiters oder über die drahtlose Koppelung von dem mobilen Endgerät, eine Benutzereingabe empfangen, die das erste oder das zweite Getränk angibt.

Je nach Auswahl wird in Schritt 105 für den betreffenden Getränketyp die dem ersten ausgewählten Getränk entsprechende Parametereinstellung als Vorgabe für diesen Getränketyp abgespeichert, oder in Schritt 106 die dem zweiten ausgewählten Getränk entsprechende Parametereinstellung.

In Schritt 107 kann optional eine Abfrage an den Benutzer erfolgen, ob er die Optimierung der Parametereinstellung beenden oder damit fortfahren möchte. Wenn der Benutzer die Einstellung so übernehmen und keine weitere Optimierung möchte, endet das Verfahren in Schritt 108. Anderenfalls, wenn der Benutzer mit der Einstellung in Bezug auf den Getränketyp noch nicht vollständig zufrieden ist, wird das Verfahren beginnend mit Schritt 101 wiederholt. Dabei wird für die weitere Änderung des Getränkebereitungsparameters der bisher erreichte Stand, also der dem ausgewählten Getränk entsprechende Getränkebereitungsparameter, bei der weiteren Optimierung berücksichtigt.

## Patentansprüche

1. Verfahren zur Ansteuerung eines Getränkebereiters (1), umfassend:
- Zubereiten (101) eines ersten Getränks eines vorgegebenen Getränketyps, mit einem ersten Wert eines Getränkebereitungsparameters;
- Zubereiten (102) eines zweiten Getränks identischen Getränketyps mit einem zweiten Wert des Getränkebereitungsparameters, der sich von dem ersten Wert unterscheidet;
- Anzeigen (103) einer Auswahl des ersten und des zweiten Getränks für die Benutzereingabe
- Empfangen einer Benutzereingabe, die das erste oder das zweite Getränk angibt; und
- Abspeichern (105, 106) des Getränkebereitungsparameters des angegebenen Getränks als Vorgabe für die Bereitung des Getränks des vorgegebenen Getränketyps für zukünftige Zubereitungen.

2. Verfahren nach Anspruch 1,
wobei
- das Anzeigen auf einem Gerätedisplay (4) des Getränkebereiters oder einem mit dem Getränkebereiter gekoppelten mobilen Endgerät (10) erfolgt; und
- das Empfangen der Benutzereingabe über ein Bedienelement (5) des Getränkebereiters (1) oder von dem gekoppelten mobilen Endgerät (10) erfolgt.

3. Verfahren nach einem der vorhergehenden Ansprüche, wobei der Getränkebereitungsparameter mehr als zwei verschiedene Werte annehmen kann, weiter umfassend:
- Empfangen (107) einer Benutzereingabe, die den Benutzerwunsch nach einer weiteren Anpassung des Getränkebereitungsparameters angibt;
- Zubereiten eines dritten Getränks identischen Getränketyps mit einem dritten Wert des Getränkebereitungsparameters;
- Zubereiten eines vierten Getränks identischen Getränketyps mit einem vierten Wert des Getränkebereitungsparameters;
wobei sich der dritte und/oder der vierte Wert von dem abgespeicherten Wert unterscheiden,
- Empfangen einer Benutzereingabe, die das dritte oder das vierte Getränk angibt; und
- Abspeichern des Getränkebereitungsparameters des angegebenen Getränks als Vorgabe für die Bereitung des Getränks.

4. Verfahren nach Anspruch 3, wobei ferner der Unterschied des dritten Wertes und des vierten Wertes des Getränkebereitungsparameters geringer ist als die Differenz zwischen dem ersten und dem zweiten Wert.

5. Verfahren nach einem der vorhergehenden Ansprüche, wobei der Getränkebereitungsparameter eines oder mehrere enthält aus der Gruppe umfassend:
- Vorbrühen oder kein Vorbrühen;
- Brühtemperatur;
- Mahlmenge;
- Mahlgrad;
- Brühdruck;
- Wassermenge;
- Milchmenge;
- Milchschaummenge;
- Milchschaumkonsistenz;
- Fließgeschwindigkeit des Wassers.

6. Getränkebereiter (1), umfassend:
- eine Getränkebereitungseinrichtung (3) mit mindestens einem veränderbaren Getränkebereitungsparameter, der mindestens zwei verschiedene Werte annehmen kann; und
- eine Steuereinrichtung (2), die eingerichtet ist, ein Verfahren nach einem der Ansprüche 1 bis 5 auszuführen.

7. Getränkebereiter (1) gemäß Anspruch 6, weiter umfassend:
- ein Anzeigeelement (4), das dazu eingerichtet ist, eine Auswahl des ersten und des zweiten Getränks für die Benutzereingabe anzuzeigen; und
- ein Bedienelement (5), das dazu eingerichtet ist, eine Benutzereingabe zu empfangen, die das erste oder das zweite Getränk angibt.

8. Getränkebereiter (1) nach Anspruch 6 und 7, wobei das Anzeigeelement (4) und das Bedienelement (5) als Touchscreen (4, 5) ausgebildet ist.

9. Getränkebereiter (1) gemäß Anspruch 6, weiter umfassend:
- eine drahtlose Schnittstelle (6), die zur Kopplung mit einem mobilen Endgerät (10) eingerichtet ist;
wobei die Steuereinrichtung (2) dazu eingerichtet ist, eine Auswahl eines ersten und des zweiten Getränks für die Benutzereingabe über die Schnittstelle (6) an das mobile Endgerät (10) zu senden und eine Benutzereingabe, die das erste oder das zweite Getränk angibt, über die Schnittstelle (6) von dem mobilen (10) Endgerät zu empfangen.

10. Getränkebereiter (1) gemäß einem der Ansprüche 6 bis 9, wobei der Getränkebereiter (1) ein Kaffeevollautomat ist und der oder die Getränkebereitungsparameter aus der folgenden Gruppe sind:
- Vorbrühen oder kein Vorbrühen;
- Brühtemperatur;
- Mahlmenge;
- Mahlgrad;
- Brühdruck;
- Wassermenge;
- Milchmenge;
- Milchschaummenge;
- Milchschaumkonsistenz;
- Fließgeschwindigkeit des Wassers.

11. System, umfassend einen Getränkebereiter gemäß Anspruch 9 oder 10 und ein mobiles Endgerät (10) mit einem Anzeigeelement (14) und einem Bedienelement (15) zur Bereitstellung einer Bedien- und Anzeigeeinrichtung, bevorzugt als Berührbildschirm.

## Claims

1. Method for controlling a beverage preparation machine (1), comprising:
- preparing (101) a first beverage of a predetermined beverage type having a first value of a beverage preparation parameter;
- preparing (102) a second beverage of an identical beverage type having a second value of the beverage preparation parameter which differs from the first value;
- displaying (103) a selection of the first and the second beverage for user input
- receiving a user input which indicates the first or the second beverage; and
- storing (105, 106) the beverage preparation parameter of the specified beverage as a default for preparing the beverage of the predetermined beverage type for future preparations.

2. Method according to claim 1,
wherein
- the display is shown on a device display (4) of the beverage preparation machine or a mobile terminal (10) coupled to the beverage preparation machine; and
- the user input is received via an operating element (5) of the beverage preparation machine (1) or from the coupled mobile terminal (10).

3. Method according to any of the preceding claims, wherein the beverage preparation parameter can assume more than two different values, further comprising:
- receiving (107) a user input which indicates the user's desire for further adjustment of the beverage preparation parameter;
- preparing a third beverage of an identical beverage type having a third value of the beverage preparation parameter;
- preparing a fourth beverage of an identical beverage type having a fourth value of the beverage preparation parameter;
wherein the third and/or fourth value differs from the stored value,
- receiving a user input which indicates the third or the fourth beverage; and
- storing the beverage preparation parameter of the specified beverage as a default for preparing the beverage.

4. Method according to claim 3, wherein the difference between the third value and the fourth value of the beverage preparation parameter is also less than the difference between the first and the second value.

5. Method according to any of the preceding claims, wherein the beverage preparation parameter contains one or more from the group comprising:
- pre-brewing or no pre-brewing;
- brewing temperature;
- amount of grinding;
- degree of grinding;
- brewing pressure;
- amount of water;
- amount of milk;
- amount of milk foam;
- milk foam consistency;
- flow rate of the water.

6. Beverage preparation machine (1), comprising:
- a beverage preparation device (3) having at least one variable beverage preparation parameter which can assume at least two different values; and
- a control device (2) which is designed to carry out a method according to any of claims 1 to 5.

7. Beverage preparation machine (1) according to claim 6, further comprising:
- a display element (4) designed to display a selection of the first and the second beverage for user input; and
- an operating element (5) designed to receive a user input which indicates the first or the second beverage.

8. Beverage preparation machine (1) according to claims 6 and 7, wherein the display element (4) and the operating element (5) are designed as a touchscreen (4, 5).

9. Beverage preparation machine (1) according to claim 6, further comprising:
- a wireless interface (6) which is designed for coupling to a mobile terminal (10);
wherein the control device (2) is designed to send a selection of a first and the second beverage for user input to the mobile terminal (10) via the interface (6) and to receive a user input, which indicates the first or the second beverage, from the mobile (10) terminal via the interface (6).

10. Beverage preparation machine (1) according to any of claims 6 to 9, wherein the beverage preparation machine
(1) is a fully automatic coffee machine and the beverage preparation parameter or parameters is or are from the following group:
- pre-brewing or no pre-brewing;
- brewing temperature;
- amount of grinding;
- degree of grinding;
- brewing pressure;
- amount of water;
- amount of milk;
- amount of milk foam;
- milk foam consistency;
- flow rate of the water.

11. System comprising a beverage preparation machine according to either claim 9 or claim 10 and a mobile terminal (10) having a display element (14) and an operating element (15) for providing an operating and display device, preferably as a touch screen.

## Revendications

1. Procédé pour la commande d'un préparateur de boissons (1), comprenant :
- la préparation (101) d'une première boisson d'un type de boisson prédéfini, comportant une première valeur d'un paramètre de préparation de boisson ;
- la préparation (102) d'une deuxième boisson de type de boisson identique comportant une deuxième valeur du paramètre de préparation de boisson qui est différente de la première valeur ;
- l'affichage (103) d'une sélection de la première et de la deuxième boisson pour l'entrée utilisateur
- la réception d'une entrée utilisateur qui indique la première ou la deuxième boisson ; et
- la mémorisation (105, 106) du paramètre de préparation de boisson de la boisson indiquée en tant que valeur de consigne pour la préparation de la boisson du type de boisson prédéfini pour des préparations futures.

2. Procédé selon la revendication 1,
dans lequel
- l'affichage est effectué sur un écran d'appareil (4) du préparateur de boissons ou sur un terminal mobile (10) couplé au préparateur de boissons ; et
- la réception de l'entrée utilisateur est effectuée par l'intermédiaire d'un élément de manipulation (5) du préparateur de boissons (1) ou en provenance du terminal mobile (10) couplé.

3. Procédé selon l'une des revendications précédentes, dans lequel le paramètre de préparation de boisson peut prendre plus de deux valeurs différentes, comprenant en outre :
- la réception (107) d'une entrée utilisateur qui indique la demande de l'utilisateur pour un autre ajustement du paramètre de préparation de boisson ;
- la préparation d'une troisième boisson de type de boisson identique comportant une troisième valeur du paramètre de préparation de boisson ;
- la préparation d'une quatrième boisson de type de boisson identique comportant une quatrième valeur du paramètre de préparation de boisson ;
dans lequel la troisième et/ou la quatrième valeur sont différentes de la valeur mémorisée,
- la réception d'une entrée utilisateur qui indique la troisième ou la quatrième boisson ; et
- la mémorisation du paramètre de préparation de boisson de la boisson indiquée comme valeur de consigne pour la préparation de la boisson.

4. Procédé selon la revendication 3, dans lequel en outre la différence entre la troisième valeur et la quatrième valeur du paramètre de préparation de boisson est inférieure à la différence entre la première et la deuxième valeur.

5. Procédé selon l'une des revendications précédentes, dans lequel le paramètre de préparation de boisson contient un ou plusieurs éléments choisis dans le groupe comprenant :
- préinfusion ou pas de préinfusion ;
- température d'infusion ;
- quantité de mouture ;
- degré de mouture ;
- pression d'infusion ;
- quantité d'eau ;
- quantité de lait ;
- quantité de mousse de lait ;
- consistance de la mousse de lait ;
- vitesse d'écoulement de l'eau.

6. Préparateur de boissons (1), comprenant :
- un dispositif de préparation de boissons (3) comportant au moins un paramètre de préparation de boisson modifiable qui peut prendre au moins deux valeurs différentes ; et
- un dispositif de commande (2) qui est configuré pour exécuter un procédé selon l'une des revendications 1 à 5.

7. Préparateur de boissons (1) selon la revendication 6, comprenant en outre :
- un élément d'affichage (4) qui est conçu pour afficher une sélection de la première et de la deuxième boisson pour l'entrée utilisateur ; et
- un élément de manipulation (5) qui est configuré pour recevoir une entrée utilisateur qui indique la première ou la deuxième boisson.

8. Préparateur de boissons (1) selon les revendications 6 et 7, dans lequel l'élément d'affichage (4) et l'élément de manipulation (5) sont conçus en tant qu'écran tactile (4, 5).

9. Préparateur de boissons (1) selon la revendication 6, comprenant en outre :
- une interface (6) sans fil qui est configurée pour être couplée à un terminal mobile (10) ;
dans lequel le dispositif de commande (2) est configuré pour envoyer une sélection d'une première boisson et de la deuxième boisson pour l'entrée utilisateur au terminal mobile (10) par l'intermédiaire de l'interface (6) et pour recevoir une entrée utilisateur, laquelle indique la première ou la deuxième boisson, en provenance du terminal mobile (10) par l'intermédiaire de l'interface (6).

10. Préparateur de boissons (1) selon l'une des revendications 6 à 9, dans lequel le préparateur de boissons (1) est une machine à café automatique et le ou les paramètres de préparation de boisson sont choisis dans le groupe suivant :
- préinfusion ou pas de préinfusion ;
- température d'infusion ;
- quantité de mouture ;
- degré de mouture ;
- pression d'infusion ;
- quantité d'eau ;
- quantité de lait ;
- quantité de mousse de lait ;
- consistance de la mousse de lait ;
- vitesse d'écoulement de l'eau.

11. Système, comprenant un préparateur de boissons selon la revendication 9 ou 10 et un terminal mobile (10) avec un élément d'affichage (14) et un élément de manipulation (15) pour la fourniture d'un dispositif de manipulation et d'affichage, de préférence en tant qu'écran tactile.
